# EUROPEAN PATENT APPLICATION

(11) **EP 1 329 705 A2**
(43) Date of publication of application: **23.07.2003**
(21) Application number: 03075168.9
(22) Date of filing: 17.01.2003
(51) Int. Cl.: G01N 1/40, B01L 3/02

(54) **Pipette- and cartridge-comprising set and related application methods**

(30) Priority: 17.01.2002 NL 1019768
(71) Applicant: Spark Holland B.V., 7800 AJ Emmen (NL)
(72) Inventor: Hilhorst, Martinus Josephus, 9736 PS Groningen (NL); Ooms, Jan Albert, 7827 JX Emmen (NL)
(74) Representative: van Westenbrugge, André

(57) **Abstract**

The invention relates to a set comprising, on the one hand, a pipette (12) having a pipette orifice (11) and, on the other hand, a cartridge (1). The cartridge comprises: a housing (2); a chamber, containing sorbent (5), provided in the housing; an inlet (8) that connects the chamber to the outside of the housing and that has an inlet orifice (10) on the outside of the housing; an outlet that connects the chamber to the outside of the housing; an inlet closure (9) that is permeable to fluid and impermeable to the sorbent, which inlet closure extends over the entire inlet passage; an outlet closure (6), such as a mesh, that is permeable to fluid and impermeable to the sorbent, which outlet closure extends over the entire outlet passage; wherein the pipette orifice can be accommodated in the inlet orifice. The invention furthermore relates to a method for applying the sample to a sorbent by means of a pipette. In addition the invention relates to an analytical method wherein a sample to be analysed is transferred by means of a pipette to a cartridge and this sample is applied to a sorbent contained in said cartridge and the sample, or at least an analyte present therein, is eluted from the sorbent using an eluent and the sample, or at least the analyte, is then subjected to an analysis.

## Description

The present invention relates to a cartridge comprising:
- a housing;
- a chamber, containing a sorbent, provided in the housing;
- an inlet that connects the chamber to the outside of the housing and that has an inlet orifice on the outside of the housing;
- an outlet that connects the chamber to the outside of the housing;
- an inlet closure that is permeable to fluid and impermeable to the sorbent, which inlet closure extends over the entire inlet passage;
- an outlet closure, such as a mesh, that is permeable to fluid and impermeable to the sorbent, which outlet closure extends over the entire outlet passage.
A cartridge of this type is disclosed in WO 00/54023 in the name of the Applicant; see in particular Figure 1a thereof. With reference to Figure 1a of WO 00/54023, this shows a cartridge consisting of a cylindrical housing 11 with a central longitudinal bore in which a sorbent 13 is arranged. The sorbent 13 is held in the bore by means of two mesh closures 12.

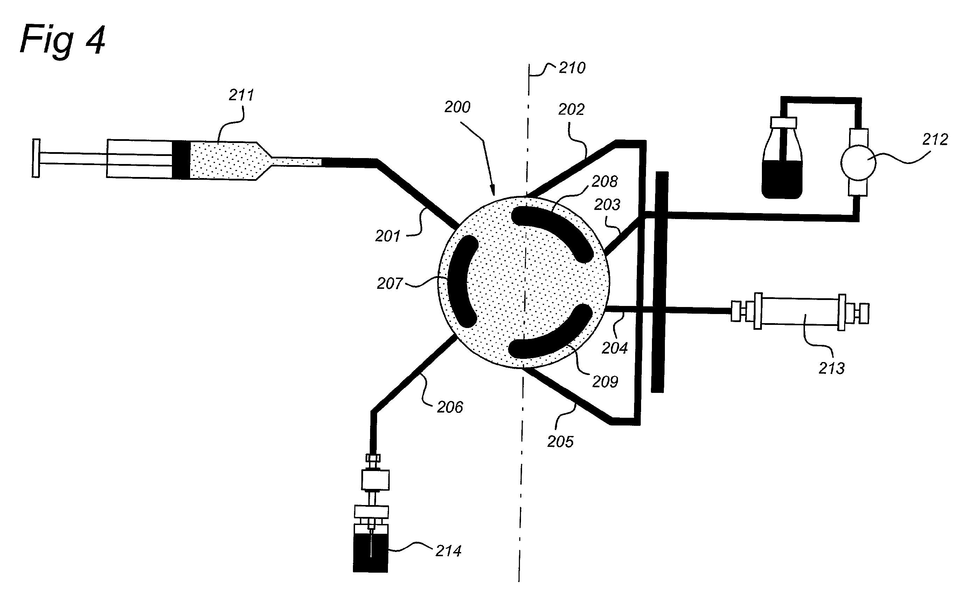

In analytical processes where the sample is fed under high pressure to the analytical equipment, as, for example, in the case of liquid chromatography processes where pressures of 200 bar and higher are customary, the problem arises that the sample has to be introduced in some way or other into a process stream that is under high pressure. A basic technique widely used for this is shown diagrammatically in Figure 4. With this technique, use is made of a so-called 6-way tap 200 (or 6-way valve) with six connections 201, 202, 203, 204, 205 and 206 and three connecting chambers 207, 208 and 209, each of which can connect two of said connections to one another. With this arrangement a distinction is made between a so-called low pressure side to the left of the axis 210 and a high pressure side to the right of the axis 210. On the low pressure side, sample is drawn up from vial 214 by means of a diagrammatically indicated syringe 211 via connection 201, chamber 207 and connection 206 by means of a syringe needle until sample is present in chamber 207. The sample in chamber 207 then has to be brought in a number of ways into the process stream on the right-hand side that is under high pressure, by turning the 6-way tap 200 so that the chamber 207 filled with sample is connected to other connections. One possibility here is to turn the tap 200 such that the chamber 207 moves into the position of chamber 209 (chamber 209 then being in the position of chamber 208 and the chamber 208 then being in the position of chamber 207). The sample can then be introduced into the liquid chromatograph 213 by feeding the sample by means of a liquid column through line 204 to the liquid chromatograph by means of a pump 212 via connection 203 through a chamber 208, via connection 202 and via connection 205 through chamber 209 (which will then be filled with sample). This process can also be carried out via many other switching positions with or without intermediate process steps. The above description is a very brief description which does not pretend to be complete and correct but is merely for illustration. The problem that is clear here is that before a subsequent analysis old sample has to be completely removed from the lines, such as 201, 202, 203, 204, 205 and 206, as well as the chambers 207, 208 and 209 so that old sample will not interfere with a subsequent analysis. A completely different variant of the known principle outlined with reference to Figure 4 is described in, inter alia, WO 00/54023, which has already been mentioned. Here the sample is introduced into the high pressure process stream by means of a cartridge, containing sample, to be introduced into said high pressure process stream. By means of such a cartridge it is possible, as described in WO 00/54023, to subject the sample to a number of additional process steps prior to the analysis. Thus, the ultimate analysis can be carried out more accurately and more reliably by, for example, as it were washing the sample in such a way that the concentration of the constituent of the sample to be analysed, the so-called analyte, is increased or, at least, impurities are removed from the sample.

As is described in WO 00/54023, a sample containing analyte is applied to the sorbent by feeding a liquid containing the sample through the bore containing the sorbent. The sample is then retained on the sorbent. A wash liquid can then be fed through the cartridge to wash the sorbent. In order to be able to subject the analyte to the analytical process, this is then eluted from the sorbent by means of an eluent fed through the cartridge. With this procedure, in particular the way in which the sample is applied to the sorbent with the aid of, inter alia, a so-called auto-sampler is laborious. The sample is supplied in a vial, drawn up from this vial, then fed through the cartridge under pressure, during which operation sample, or at least analyte contained therein that is to be analysed, is applied to the sorbent. The sample is fed through various lines before it passes from the vial onto the sorbent. A number of disadvantages are associated with this process. When successively applying various samples to the sorbent in various cartridges it can be the case that there is still sample from a previous application left in the lines. In order to counteract this as far as possible, the lines must be flushed. Furthermore, the suction orifice, usually a needle, by means of which the sample is drawn up from the vial, always has to be cleaned in the interim or replaced in the interim in order to prevent contamination of sample in the one vial by sample from the other vial. A relatively large amount of sample is needed with this process. If small quantities of sample are available, it can prove difficult to apply sufficient sample to the sorbent in practice.

The aim of the present invention is to overcome the abovementioned problems by making simplified application of sample to the sorbent possible.

The abovementioned aim is achieved according to the invention by providing a set comprising, on the one hand, a pipette having a pipette orifice and, on the other hand, a cartridge, wherein the cartridge comprises:
- a housing;
- a chamber, containing a sorbent, provided in the housing;
- an inlet that connects the chamber to the outside of the housing and that has an inlet orifice on the outside of the housing;
- an outlet that connects the chamber to the outside of the housing;
- an inlet closure that is permeable to fluid and impermeable to the sorbent, which inlet closure extends over the entire inlet passage;
- an outlet closure, such as a mesh, that is permeable to fluid and impermeable to the sorbent, which outlet closure extends over the entire outlet passage;
wherein the pipette orifice can be accommodated in the inlet orifice.

With this arrangement the pipette can be either a manual pipette or a pipette forming part of a pipetting robot. With this arrangement the pipette contains sample that is fed directly from the pipette to the cartridge, in particular is applied onto the sorbent contained therein. In order to ensure that the sample contained in the pipette passes into the sorbent-containing chamber of the cartridge, it is important which this arrangement that the pipette orifice can be accommodated in the inlet orifice. Applying sample to the sorbent in this way prevents retention of sample in line systems, and it is furthermore possible to ensure that all the sample passes onto the sorbent, even in the case of very small amounts of sample, for example samples of less than 15 µl. This is because the complete sample can be injected into the cartridge. The more sample passes onto the sorbent the more sensitive will be the final analysis. A further advantage is that using a set of this type it is possible even to apply the sample to the sorbent in the field. Thus, this no longer has to take place in special sampling or analytical equipment. Here, in the field is understood to be not only in the open air but also in a laboratory or some other place where the sample is taken. The sample can then be transferred immediately to the sorbent after it has been taken using the pipette. The invention thus provides a very simple injection principle for applying sample to the sorbent.

So as to minimise, if not to be able completely to prevent, spillage of sample when transferring to the sorbent, according to the invention it is advantageous if the pipette end containing the pipette orifice and the inlet orifice are so constructed that when the pipette orifice is accommodated in the inlet orifice the pipette end and the wall section of the housing surrounding the inlet orifice, viewed in the circumferential direction of the pipette point, can make sealing contact. What is achieved in this way is that the pipette orifice connects onto the inlet orifice.

For the purposes of simple and reliable orientation of the pipette orifice in the inlet orifice, according to the invention it is advantageous if the pipette point and the inlet orifice are both of tapered, such as conical, construction. In order to be able to achieve a good seal with this arrangement in a simple and reliable manner, according to the invention it is advantageous if the degree of taper of the inlet orifice has a more obtuse angle than the degree of taper of the pipette point. Specifically, in this way it is possible to achieve a linear seal in the circumferential direction of the pipette point with adequate contact pressure of the pipette point. Preferably the inlet orifice will be conical with an angle of conicity in the range from 30° to 35°. In particular the angle of conicity will be approximately 32°. With this angle of conicity the cartridge is well suited for use with a wide range of pipettes known per se in practice.

In order to improve the transfer of sample from the pipette to the sorbent, according to the invention it is preferable if the inlet closure comprises filter paper, in particular is made of filter paper. With this arrangement this filter paper acts as an intermediary between the pipette and the sorbent. The filter paper as it were sucks the sample from the pipette in order subsequently to transfer this sample to the sorbent. Inter alia, the last residues of sample that will possibly remain on the bottom of the pipette point will thus be sucked off the pipette point by the filter paper, which counteracts spillage of the sample and contamination by the sample.

According to an advantageous embodiment of the invention, the sorbent comprises grains having a grain size of less than 140 µm, in particular less than 75 µm, such as grains having a size of approximately 50 µm. What is achieved with such a small grain size is that capillary action takes place in the space between the grains. In this way application of the sample to the entire sorbent is ensured in a simple manner, without substantial pressure having to be delivered through the pipette for this purpose. The sample is automatically drawn into the sorbent as a result of the capillary action. With this arrangement the grains are preferably made of an essentially inert material, such as glass beads. This makes the subsequent separation, which is also referred to as elution, of the sample from the sorbent very easy. All that is required is to pass an eluent through the sorbent under pressure.

The cartridge will usually have a cylindrical shape with a diameter of less than 12 mm, even less than 9 mm, for example approximately 8 mm.

According to a further aspect, the present invention relates to a method for applying a sample to the sorbent in a cartridge, wherein the sample is fed to the cartridge by means of a pipette.

According to yet a further aspect, the invention relates to an analytical method wherein a sample to be analysed is transferred to a cartridge by means of a pipette and this sample is applied to a sorbent contained in the cartridge and the sample, or at least an analyte contained therein, is eluted from the sorbent using an eluent and the sample, or at least the analyte, is then subjected to an analysis.

The set according to the invention, as well as the method of application according to the invention and the analytical method according to the invention, are well suited, inter alia, for use with a so-called "solid phase extraction instrument", as disclosed, for example, in WO 00/54023 in the name of the Applicant, which has already been mentioned above. Solid phase extraction (abbreviated as SPE) in general comprises one or more of the following steps:
(a) conditioning of a sorbent in a cartridge, a liquid suitable for conditioning being passed through the cartridge;
(b) application of a sample that contains the analyte to the sorbent, a liquid that contains the sample being passed through the cartridge;
(c) washing the sorbent, a wash liquid being passed through the cartridge;
(d) elution of the analyte from the sorbent, an eluent being passed through the cartridge.

If the set according to the invention is used, steps (a) and (c) of these are optional; with the set according to the invention these two steps will even frequently be superfluous. Step (a) serves to moisten the surface of the sorbent to create a phase that can absorb the analyte easily. In step (b) the substance to be analysed, the analyte, is applied to the sorbent. In step (c) the sorbent is washed so that constituents that could interfere with the detection of the analyte are removed. In step (d) the analyte is eluted from the sorbent so that, in a subsequent step, it can be detected, for example by gas chromatographic analysis (GC) or by means of liquid chromatography (HPLC).

As will be clear, the present invention therefore also relates to the use of the set according to the invention in a solid phase extraction process.

The present invention also relates to a method for introducing an analyte into a liquid chromatograph, wherein a set according to the invention is used to transfer the analyte from the pipette onto the sorbent contained in the cartridge and wherein the cartridge is then accommodated in a line system through which a liquid stream is fed under high pressure to a liquid chromatograph. In this way the analyte is entrained out of the sorbent by the liquid under high pressure, in order to be analysed in the liquid chromatograph.

The present invention will be explained in more detail below with reference to an example shown in the drawing. This example serves merely for illustration of the invention and is certainly not intended to restrict the invention. In the drawing:
Figure 1a shows a plan view of a cartridge according to the invention for use with a set according to the invention;
Figure 1b shows, diagrammatically, a set according to the invention with the cartridge in longitudinal section according to Ib in Figure 1a and a view of the pipette;
Figure 2 shows, diagrammatically, the use of the cartridge according to the invention in an SPE instrument.
Figure 3 shows, diagrammatically, a perspective view of an SPE instrument, which view corresponds to Figure 1 in WO 00/54023; and
Figure 4 shows, diagrammatically, a system from the prior art.

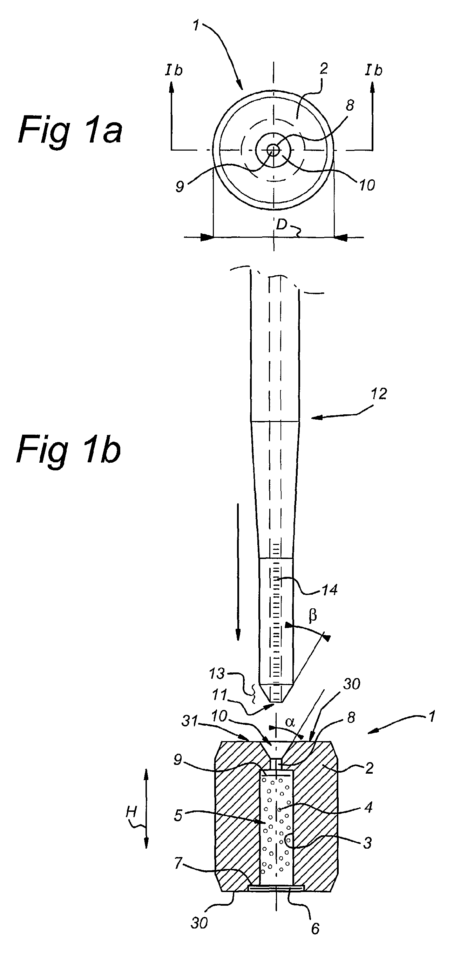

With reference to Figs 1a and 1b, a cartridge is indicated by 1. Such a cartridge usually has dimensions in the range from 10 to 20 mm in the height direction H and a diameter of approximately 8 mm in the width direction D. These values for the dimensions of the cartridge 1 are intended solely by way of indication, as are also dimensions of the cartridge 1 to be mentioned further below.

As is shown in Figures 1a and 1b, the cartridge 1 is cylindrical. The cartridge 1 can optionally also have a different shape, such as a block shape. As has been stated, the cartridge 1 consists of a cylindrical housing 2 with a bore 3 therein. In this example, the bore 3 has a diameter of approximately 2 mm and defines a chamber in which sorbent 5 is accommodated. In this illustrative embodiment the sorbent 5 consists of spheres 4, in particular so-called glass beads having a grain size of approximately 50 µm. In order to keep the sorbent in the chamber 3 the latter is closed at the outlet 7 by means of a mesh 6. This mesh 6 is recessed in the housing 2. An inlet 8 is provided at the other longitudinal end of the chamber 3. This inlet 8 has an inlet orifice 10 opening on the outside 30 of the housing 2. The inlet orifice 10 is of conical construction with an angle of conicity α. In order to prevent the sorbent 5 leaving the housing 2 via the inlet 8, the chamber 3 is provided with an inlet closure 9. This inlet closure 9 can also be a mesh but is, in particular, a piece of filter paper.

Fig. 1b furthermore shows a diagrammatic view of a pipette 12. The pipette 12 has a pipette orifice 11 at its inlet/outlet end, called pipette point 13. The pipette point 13 has an end section of conical construction. This end section of conical construction has an angle of conicity β. As indicated diagrammatically, the pipette 12 contains a sample 14.

In order to apply the sample 14 from the pipette 12 onto the sorbent 5 the pipette orifice 11 is inserted into the inlet orifice 10 and the pipette 12 is operated to dispense sample via the pipette orifice. So that a reliable linear seal can be achieved all round the pipette orifice 11 between, on the one hand, the pipette point 13 and, on the other hand, the housing 2 it is preferable according to the invention if the angle of conicity α is greater than the angle of conicity β.

As a consequence of the size of the grains 4, capillary action takes place, as a result of which the sample 14 dispensed onto the sorbent 5 automatically penetrates deep into the sorbent 5. As a consequence of the capillary action it is not necessary to inject the sample 14 into the chamber 3 under force. With this arrangement the filter paper 9 also has the additional effect that this also has a capillary action which produces distribution of the sample over the cross-sectional surface of the chamber 3 directly at the inlet, as a result of which the sample can be drawn into the sorbent more effectively by the capillary action.

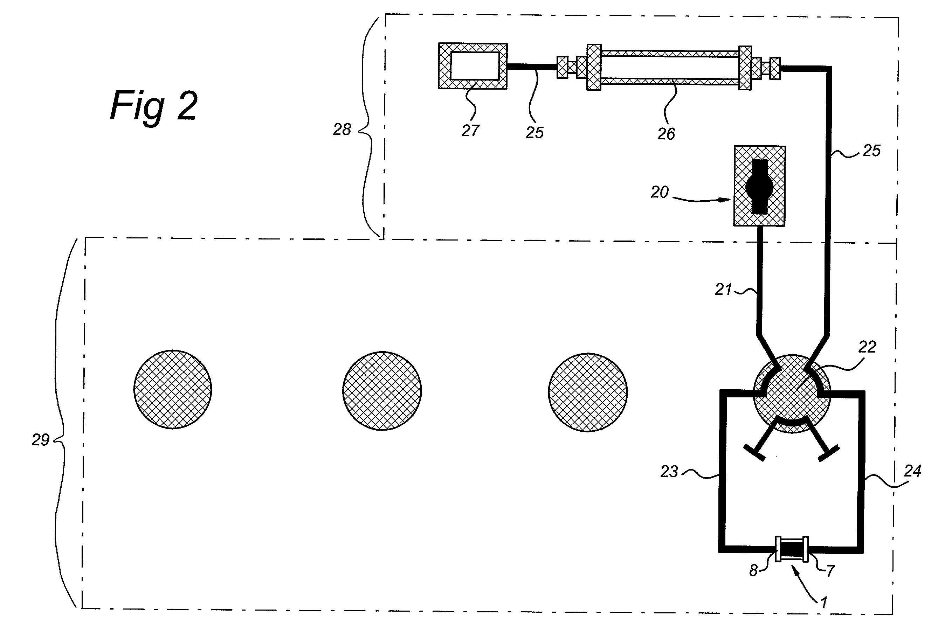

When the cartridge 1, or at least the sorbent 5 therein, has been loaded with sample this cartridge can be placed, for example, in an SPE instrument 29 for analysis in an analytical device 28; see Fig. 2. Further referring to Fig. 2, it can be seen that the analytical device 28 contains a pump 20 that is connected to a line 21, which, via a multi-way valve 22, is in communication with a line 23 that emerges at the inlet 8 of the cartridge 1. The line 24 connects onto the outlet 7 of the cartridge 1, which line 24 is in communication, via the same multi-way valve 22 and line 25, with, in this example, a liquid chromatography column 26 and a detector 27. A pressurised effluent is passed through the cartridge 1 under pressure via pump 20. The pump pressure depends on the counter-pressure in the analytical device and can range from 1 bar or even less to more than 10 bar, for example 200 bar. This effluent, which can be either a gas or a liquid, but is usually a liquid, entrains the sample, or at least the analyte, absorbed in the sorbent in order to feed this to the analysis.

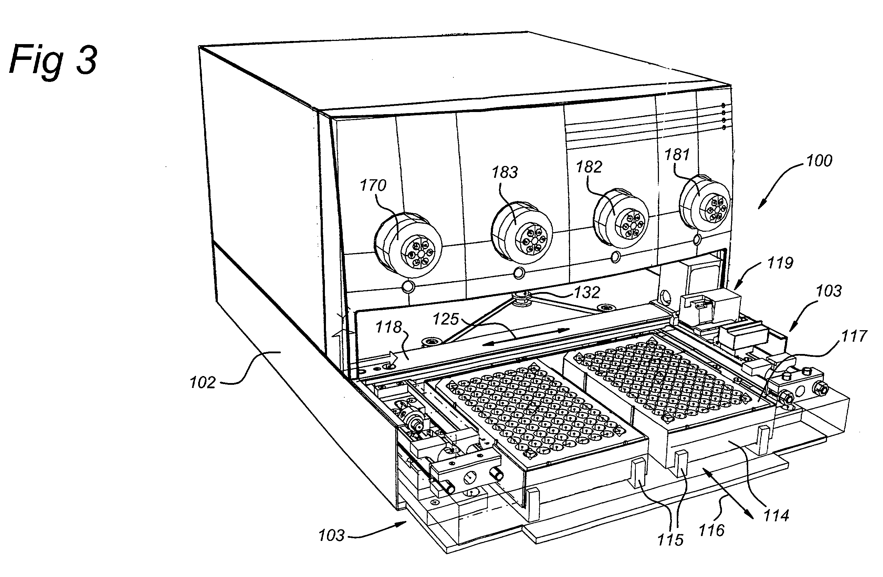

Fig. 3 shows, by way of illustration, a diagrammatic, but more detailed view of an SPE instrument 100 as disclosed in WO 00/54023. Fig. 3 corresponds to Fig. 1 in said WO 00/54023, with the understanding that all reference numerals have been increased by 100 compared with Fig. 1 in WO 00/54023. For the description of Fig. 3 reference is made to the description of the figure in WO 00/54023, which in this context must be considered as being incorporated into the present application.

With regard to the SPE instrument according to WO 00/54023, it is pointed out for the sake of completeness that the (auto)sampling section thereof (that is of assistance when loading the cartridge with sample) is essentially superfluous when using the present invention. This does not stop the present invention being very suitable for use with the instrument from WO 00/54023, optionally by providing this instrument with an additional or replacement sampler working with a pipette.

As will be clear, many variants of the present invention that fall within the scope of the claims are conceivable. For instance, apart from grains 4 such as glass beads, the sorbent 5 can comprise many sorbent materials/compositions already known from the state of the art. The sorbent can, for example, be so chosen depending on the analyte to be analysed that it has a specific affinity for retaining said analyte, in particular for absorption of said analyte. In this way it then, for example, becomes possible to use the abovementioned step (c), which is not unusual with regard to SPE processes, in which the sorbent is washed with a wash liquid in such a way that components of the sample which are not part of the analyte are flushed out. This can increase the accuracy of the analysis or have a beneficial influence in some other way on the results to be achieved by the analysis.

As will be clear, the set according to the invention is much more than merely an improvement to be used with the instrument as disclosed in WO 00/54023. The set according to the invention can also be used completely independently of the instrument described in WO 00/54023, optionally with other processes or instruments.

Because it is possible to work with pipettes with disposable pipette ends 12, it is possible to make rinsing/cleaning of the line in the sampler unit completely superfluous. After all, the pipette end takes up the sample in order to dispense this to the cartridge, after which the pipette end is thrown away. With this arrangement no parts other than the pipette end and the cartridge come into contact with sample.

## Claims

1. Set comprising, on the one hand, a pipette (12) having a pipette orifice (11) and, on the other hand, a cartridge (1), wherein the cartridge comprises:
• a housing (2);
• a chamber (3), containing a sorbent (5), provided in the housing;
• an inlet (8) that connects the chamber (3) to the outside of the housing (2) and that has an inlet orifice (10) on the outside (30) of the housing (2);
• an outlet (7) that connects the chamber (3) to the outside (30) of the housing (2);
• an inlet closure (9) that is permeable to fluid and impermeable to the sorbent (5), which inlet closure (9) extends over the entire inlet (8) passage;
• an outlet closure (6), such as a mesh, that is permeable to fluid and impermeable to
the sorbent, which outlet closure (6) extends over the entire outlet (7) passage; wherein the pipette orifice (11) can be accommodated in the inlet orifice (10).

2. Set according to Claim 1, wherein the inlet closure (9) is sunken with respect to the outside (30) of the of the cartridge (1).

3. Set according to one of the preceding claims, wherein a pipette end (13) containing the pipette orifice (11) and the inlet orifice (10) are so constructed that when the pipette orifice (11) is accommodated in the inlet orifice (10) the pipette end (13) and the wall section (31) of the housing (2) surrounding the inlet orifice (10) can make sealing contact with one another in the circumferential direction of the pipette point (13).

4. Set according Claim 3, wherein the pipette point (13) and the inlet orifice (10) are both of tapered, such as conical, construction.

5. Set according to Claim 4, wherein the degree of taper of the inlet orifice (10) has a more obtuse angle than the degree of taper of the pipette (12).

6. Set according to Claim 4 or 5, wherein the inlet orifice (10) is conical with an angle of conicity in the range from 30° to 35°, in particular approximately 32°.

7. Set according to one of the preceding claims, wherein the inlet closure (9) comprises filter paper, in particular is made of filter paper.

8. Set according to one of the preceding claims, wherein the sorbent (5) comprises grains (4) having a grain size of less than 140 µm, in particular less than 75 µm, such as grains having a grain size of approximately 50 µm.

9. Set according to Claim 8, wherein the grains (4) are made of an essentially inert material, such as glass beads.

10. Set according to one of the preceding claims, wherein the cartridge (1) has a diameter of less than 12 mm, such as less than 9 mm, for example approximately 8 mm.

11. Method for applying a sample to a sorbent (5) in a cartridge (1), wherein the sample is added to the cartridge (1) by means of a pipette (12) for application to the sorbent (5).

12. Analytical method wherein a sample to be analysed is transferred to a cartridge (1) by means of a pipette (12) and this sample is applied to a sorbent (5) contained in the cartridge and the sample, or at least an analyte contained therein, is eluted from the sorbent using an eluent and the sample, or at least the analyte, is then subjected to an analysis.

13. Use of a set according to one of Claims 1-10 in a solid phase extraction process.

14. Use of a set according to one of Claims 1-10 in a liquid chromatography process.

15. Method for introducing an analyte into a liquid chromatograph, wherein a set according to the invention is used to transfer the analyte from the pipette onto the sorbent contained in the cartridge and wherein the cartridge is then accommodated in a line system through which a liquid stream is fed under high pressure to a liquid chromatograph.

16. Cartridge suitable for a set according to one of Claims 1-10.

17. Cartridge according to Claim 16, wherein the inlet closure (9) is sunken with respect to the outside (30) of the cartridge (1) such that there is a freely accessible recess at the inlet orifice (10).
